Europäisches Patentamt

European Patent Office

Office européen des brevets

(19)

(11) EP 0 905 354 A2

(12) EUROPEAN PATENT APPLICATION

(43) Date of publication:
31.03.1999 Bulletin 1999/13

(51) Int Cl.⁶: F01N 3/08

(21) Application number: 98307820.5

(22) Date of filing: 25.09.1998

(84) Designated Contracting States:
AT BE CH CY DE DK ES FI FR GB GR IE IT LI LU
MC NL PT SE
Designated Extension States:
AL LT LV MK RO SI

(30) Priority: 25.09.1997 JP 259847/97
14.09.1998 JP 259529/98

(71) Applicant: Mazda Motor Corporation
Aki-gun Hiroshima-ken (JP)

(72) Inventors:
• Sumida, Hirosuke
Hiroshima-shi, Hiroshima (JP)
• Koda, Yuki
Hiroshima-shi, Hiroshima (JP)

• Kyogoku, Makoto
Hiroshima-shi, Hiroshima (JP)
• Iwakuni, Hideharu
Higashihiroshima-shi, Hiroshima (JP)
• Yamada, Hiroshi
Hatsukaichi-shi, Hiroshima (JP)
• Okamoto, Kenji
Hiroshima-shi, Hiroshima (JP)
• Takami, Akihide
Hiroshima-shi, Hiroshima (JP)

(74) Representative: Messulam, Alec Moses
A. Messulam & Co.
24 Broadway
Leigh-on-Sea Essex SS9 1BN (GB)

(54) **Exhaust gas purifying catalyst and system and method of producing the catalyst**

(57) An exhaust gas purifying system and a catalyst (14,31) used for the system prevents NOx absorbent from being poisoned by a sulphur compound to keep NOx absorption performance. The catalyst has at least an inner (26) and an outer layer (28,29) on a support material (25), the inner layer having NOx absorbent capable of absorbing NOx and a sulphur compound in the exhaust gas produced from combustion of a lean fuel mixture, releasing the NOx into the exhaust gas and substantially stopping absorbing the sulphur compound when a rich mixture is burnt, and the outer layer having a sulphur compound absorbent capable of absorbing the sulphur compound in the exhaust gas produced from combustion of a lean fuel mixture and capable of discharging the sulphur compound into the exhaust gas when a rich fuel mixture is burnt while the engine operates in a lean-burn zone. NOx is absorbed by the NOx absorbent in the inner layer and the sulphur compound is absorbed in the sulphur compound absorbent in the outer layer. Therefore the NOx absorbent in the inner layer is protected from being poisoned by the sulphur compound.

FIG. 2

**Description**

The present invention relates to an exhaust gas purifying system for a vehicle, an exhaust gas purifying catalyst for use with the exhaust gas purifying system, and a method of producing the exhaust gas purifying catalyst.

It has been known that some exhaust gas purifying systems have a catalyst having a NOx (nitrogen oxides) absorbent capable of absorbing NOx in the exhaust gas produced by the engine operating while a fuel mixture is lean and capable of discharging NOx into the exhaust gas when the oxygen concentration in the exhaust gas becomes lower so as to reduce the discharged NOx. However, such an NOx absorbent also tends to absorb more SOx (sulphur oxides) rather than NOx in an exhaust gas, which causes the NOx absorbent to be poisoned with the SOx and then leads to significantly reduced performance of the NOx absorbent.

In order to reduce the problem of SOx-poisoning described above, JP-A 7-155,601 discloses an improved catalyst having double catalytic layers carried on a support material, namely an inner or base layer which contains a NOx absorbent (one of alkaline earth metals), platinum (Pt) and alumina, and an outer or over layer which contains an oxide of a metal selected from the group consisting of Fe, Co, Ni, Cu and Mn. This catalyst can avoid the SOx-poisoning problem because the metal oxide in the outer layer oxidises SOx in the exhaust gas to $SO_3$ which produces a SOx salt to prevent the inner layer from being poisoned by SOx.

JP-A 9-10,601 discloses another improved catalyst having double catalytic layers carried on a support material, namely an inner or base layer which contains a NOx absorbent such as, platinum (Pt), palladium (Pd), barium (Ba) and alumina, and an outer or over layer which contains zeolite and ceria. In this catalyst, the zeolite in the outer layer prevents Ba in the inner layer from being poisoned by sulphur.

Further, an exhaust gas purifying system is known from JP-A 6-346,768. This system is mainly comprised of two parts, namely a first part which is located upstream from a second part in the exhaust gas flow path. The first part has a SOx absorbent made of particles of, for example, copper (Cu), iron (FE), manganese (Mn) and/or nickel (Ni) supported on a support material and is capable of absorbing SOx in the exhaust gas produced while a lean air-fuel mixture is burned and discharging SOx into the exhaust gas while a rich air-fuel mixture is burned, and the second part has a NOx absorbent made of particles of, for example, alkaline metals, alkaline earth metals and/or rare earth metals, and noble metals supported on a support material and is capable of absorbing NOx in the exhaust gas produced while a lean air-fuel mixture is burned and discharging NOx into the exhaust gas while a rich air-fuel mixture is burned. The system has a bypass passage bypassing the second part and connected to a switching valve located between the first part and the second part. With the system, when a lean air-fuel mixture is burned, the exhaust gas passes through the second part after flowing through the first part where SOx is absorbed and eliminated from the exhaust gas so that the NOx absorbent of the second part is prevented from being poisoned by SOx, or when a rich air-fuel mixture is burned, the exhaust gas bypasses the second part so that the NOx absorbent of the second part is prevented from being poisoned by SOx which is discharged from the SOx absorbent of the first part.

The invention seeks to provide an improved catalyst, a simple exhaust gas purifying system equipped with the improved catalyst and a method of producing the improved catalyst.

Another aim of the invention to provide an improved catalyst which is capable of absorbing sulphur oxides, such as SOx and $H_2S$, in the presence of oxygen in the exhaust gas and releases the sulphur oxides when the oxygen concentration in exhaust gas is reduced and of preventing NOx absorbent from being poisoned by a sulphur compound.

The prior art catalyst disclosed in the JP-A 6-346,768 uses the same type of SOx absorbent to prevent NOx absorbent from being poisoned by SOx. This prior art catalyst has SOx absorbent and NOx absorbent separately disposed upstream and downstream, respectively, in the exhaust pipe, so that it is necessary to provide a bypass passage and a switching valve which bypasses the NOx absorbent to isolate the NOx absorbent from SOx released from the SOx absorbent, which is always undesirable for a simple structure of exhaust gas purifying system.

The present invention uses a multiple layer catalyst comprising an inner layer which contains NOx absorbent formed on a support member and an outer layer which contains sulphur compound absorbent, which provides a simple structure of exhaust gas purifying system.

Thus, according to the invention, there is provided an exhaust gas purifying system having a support member, an exhaust gas purifying catalyst containing a NOx absorbing material for absorbing NOx in an exhaust gas from the engine in the presence of oxygen and releasing the NOx while the exhaust gas reduces its oxygen concentration formed on the support member, and an oxygen concentration change means for changing the oxygen concentration of the exhaust gas. The catalyst comprises an inner layer, formed on the support member, which contains the NOx absorbing material and an outer layer, formed over the inner layer, which contains a sulphur compound absorbing material for absorbing sulphur oxides in the exhaust gas in the presence of oxygen and releasing the sulphur oxides while the exhaust gas reduces its oxygen concentration.

With the exhaust gas purifying system, when the oxygen concentration control means increases the oxygen concentration of the exhaust gas by, for example, providing a lean air-fuel ratio of the exhaust gas, on one hand, NOx in the exhaust gas is absorbed by the NOx absorbent in the inner layer, and, on the other hand, the sulphur compounds

(SOx and $H_2S$) in the exhaust gas are absorbed by the sulphur compound absorbent in the outer layer. Accordingly, the NOx absorbent in the inner layer is protected by the sulphur compound absorbent from being poisoned by sulphur compounds. When the oxygen concentration control means lowers the oxygen concentration of exhaust gas by, for example, providing a rich air-fuel ratio of the exhaust gas, on one hand, the NOx absorbent releases NOx gases which have been absorbed and, on the other hand, the sulphur compounds absorbent releases sulphur compounds. In the atmosphere of oxygen with low concentration, the NOx absorbent is made hard to absorb sulphur compounds, so that it is protected from being poisoned by sulphur compounds released from the sulphur compound absorbent.

The oxygen concentration control means may change the oxygen concentration by controlling an air-fuel ratio of a fuel mixture so as to change it between a lean air-fuel ratio represented by an excess air factor ($\lambda$) greater than 1 (one) and a rich air-fuel ratio represented by an air excess factor ($\lambda$) equal to or less than 1 (one). Providing a lean air-fuel ratio raises the oxygen concentration of exhaust gas, so that the NOx absorbent and the sulphur compound absorbent work with improved absorbing performance. Providing a rich air-fuel ratio lowers the oxygen concentration of exhaust gas, causing the NOx absorbent to release NOx and the sulphur compound absorbent to release sulphur compounds. Further, the NOx absorbent does not perform substantial absorption of sulphur compounds, it is never poisoned by sulphur compounds released from the sulphur compound absorbent.

A large quantity of an oxide of cerium (Ce), zirconium (Zr), nickel (Ni), iron (FE), cobalt (Co), vanadium (V) or titanium (Ti), or preferably either ceria (cerium oxide $CeO_2$) or a vanadium oxide ($V_2O_5$) alone, or a mixture of the two, may be employed as a sulphur compound absorbent. As both ceria and vanadium oxide are capable of starting release of sulphur compounds at a low temperature of, for example, about 500°C, it is advantageous in preventing the sulphur compound absorption capacity of the absorbent from being saturated. If the absorption capacity is saturated and substantially no sulphur compounds is absorbed, the NOx absorbent is made hard to be protected from being poisoned by sulphur compounds.

In the case of using ceria as the sulphur compound absorbent in the outer layer, the quantity of ceria is usually preferred to be between 80 and 360 g per one litre of the supporting member (which is hereafter referred to as 80 to 360 g/L). If the amount is less than 80 g/L, the absorption capacity will be short, which may cause sulphurpoisoning of the NOx absorbent. While, as the quantity of ceria increases, the absorption capacity increases, there occurs no improvement of the capacity any more even when the quantity reaches over 360 g/L. Moreover, it becomes costly and cause clogging of cells of a honeycomb bed, if used as the support member, due to a thick ceria layer and a decrease in cross sectional area of the cell.

It is preferable to provide an intermediate layer capable of activating NOx gas between the inner layer containing the NOx absorbent and the outer layer containing the sulphur compound absorbent. Usually alkaline earth metals or rare earth metals, typically such as Ba, are used as the NOx absorbent. In this case, the NOx absorption is mainly done through chemical absorption process which needs activation of NOx. Thus forming the intermediate layer capable of activating NOx promotes NOx absorption by the NOx absorbent contained in the inner layer. As the activating material capable of activating NOx contained in the intermediate layer, zeolite bearing noble metals thereon is preferably used, especially the zeolite bearing Pt or both Pt and Rh is more preferable.

It is preferred for the inner layer containing the NOx absorbent to contain further noble metals in view of reduction or deoxidisation of NOx. Alkaline metals, alkaline earth metals and rare earth metals may be employed as the NOx absorbent.

The exhaust gas purifying catalyst which comprises a support member and a catalytic material disposed on the support member and containing a NOx absorbing material which absorbs NOx in an exhaust gas from an engine in the presence of oxygen and releases said NOx absorbed thereby while the exhaust gas reduces its oxygen concentration is produced by a method of the invention which comprises the stems of: forming an inner layer for supporting a bearing material by which the NOx absorbing material is borne on the support member; forming an outer layer over the inner layer containing a basic compound which is harder to bear said NOx absorbing material than the support material; and impregnating the inner layer with a solution of the NOx absorbing material through the outer layer so as thereby to bear the NOx by the bearing material.

While, in order to bear NOx absorbent in an inner layer formed on a support layer, it is typical to form an outer layer over the inner layer after having borne the NOx absorbent in the inner layer. During forming the outer layer, the NOx absorbent in the inner layer partly moves into the outer layer or is partly removed from the inner layer. In such a case, it is preferred to impregnate the inner layer with a solution of NOx absorbent after having formed the outer layer over the inner layer. However, when employing the impregnation process, the NOx is also distributed in the outer layer.

According to the method of the invention, the outer layer is provided as a layer containing a basic compound by which the NOx is hard to be borne with an effect of bearing NOx greatly in the inner layer but small in the outer layer. While the NOx absorbent moves into the outer layer when the outer layer is formed by a wash-coating process in which the outer layer is formed by dipping the support member with the inner layer formed thereon in a slurry, the method of the invention is especially effective in the case where the outer layer is formed by the wash-coating process.

In the method of the invention, it is preferred to employ an oxide of an ionic electric field intensity of approximately less than 0.8 as the basic compound when one of alkaline metals, alkaline earth metals and rare earth metals is used as a NOx absorbent and alumina is used as the support material for the NOx absorbent. In the case of impregnating various oxides with the NOx absorbent, the ease of adhesion of the NOx absorbent to the oxide depends upon the intensity of ionic electric field or basic degree of the oxide. Specifically, the NOx absorbent is made harder to adhere to the oxide with an increase in the intensity of ionic electric field or the basic degree of the oxide. When using as the support material alumina whose intensity of ionic electric field is approximately 0.83, it is preferred to let the outer layer contain an oxide which has the intensity of ionic electric field lower than alumina in order that the alumina in the inner layer bears a large quantity of NOx absorbent. Ceria and magnesium are preferred as one of such oxides having low intensity of ionic electric field.

According to the exhaust gas purifying system of the invention there is provided a catalyst which comprises a support member, an inner layer formed on the support member, which contains the absorbing material capable of absorbing NOx in an exhaust gas in the presence of oxygen and releasing the NOx while the exhaust gas reduces its oxygen concentration and an outer layer, formed over the inner layer, which contains a sulphur compound absorbing material for absorbing sulphur oxides in the exhaust gas in the presence of oxygen and releasing the sulphur oxides while the oxygen concentration in the exhaust gas is reduced, and an oxygen concentration change means for changing the oxygen concentration of the exhaust gas, the NOx absorbent being protected by the sulphur compound absorbent from being poisoned by sulphur compound without the necessity of providing the exhaust line with a bypass passage and a switching valve. The use of 80 to 360 g/L ceria for sulphur compound absorbent makes it possible to absorb a desired quantity of sulphur compounds in the exhaust gas even at low temperatures, which is desirable for the NOx absorbent to be protected from sulphur poisoning.

According to the method of producing the exhaust gas purifying catalyst of the invention which forms an inner layer containing a support material by which the NOx absorbent is borne on the support member, forming an outer layer containing a basic compound which is harder to bear the NOx absorbent than the support material over the inner layer, and impregnating the inner layer with a solution of NOx absorbent through the outer layer, the outer layer is prevented from bearing a large quantity of NOx absorbent.

The invention will now be described further, by way of example, with reference to the accompanying drawings, in which:

Figure 1 schematically depicts an exhaust gas purifying system in accordance with an embodiment of the invention;

Figure 2 is a fragmentary sectional view of a catalyst in accordance with an embodiment of the invention;

Figure 3 is a map of engine operating zones;

Figure 4 is a flow chart illustrating an air-fuel ratio control sequence routine;

Figure 5 is a graphical diagram of an amount of ceria ($CeO_2$) versus NOx absorption rate, namely a $SO_2$ poisoning prevention performance of the NOx absorption of the catalyst;

Figure 6 is a fragmentary sectional view of a catalyst in accordance with another embodiment of the invention;

Figure 7 is a graphical diagram of NOx absorption rates with respect to various oxides contained in the outer layer of a fresh catalyst and in the outer layer of the catalyst after exposure to $SO_2$; and

Figure 8 is a graphical diagram showing the relationship between Ba concentration and ion electric field intensity.

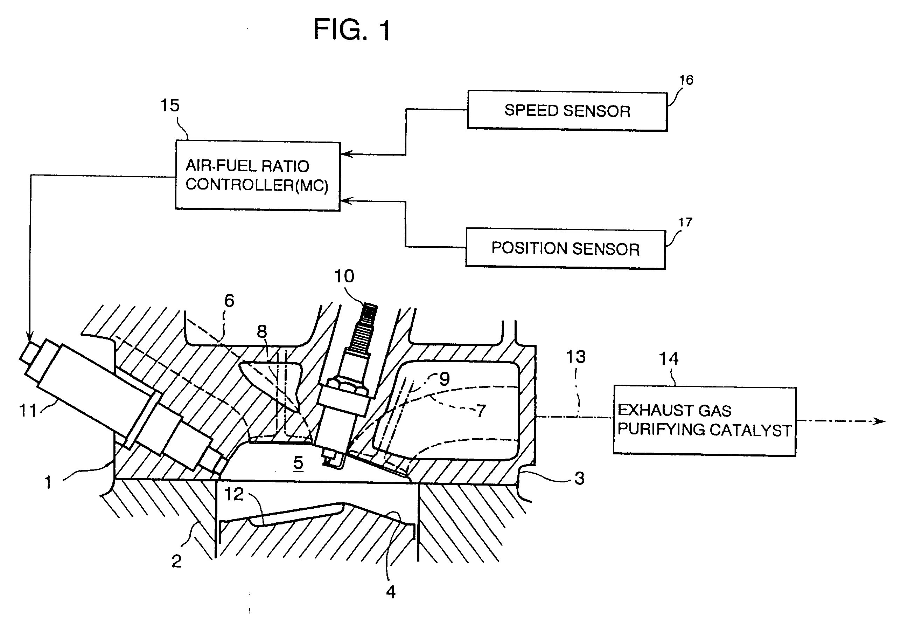

Referring to the drawings in detail, and, more particularly, Figure 1 showing an exhaust gas purifying system in accordance with an embodiment of the invention applied to a direct fuel injection type of gasoline engine, an engine body 1 has an engine block 2 and a cylinder head 3 between which combustion chambers 5 only one of which is shown. The piston 4 slides in a cylinder bore 2a of the cylinder block 2. Each combustion chamber 5 is provided with an intake port 6 and an exhaust port 7 which are opened and shut off at a proper timing by intake valve 8 and an exhaust valve 9, respectively. The cylinder head 3 is provided with a spark plug 10 such that the distal end of the spark plug 10 extends down in the combustion chamber 5 and a fuel injector 11 such as to direct fuel below the spark plug 10. The piston 4 at its top end is formed with a cavity 12 which reflects fuel injected from the fuel injector 11 toward the spark plug 10. An exhaust line 13 extends from the exhaust port 7 and is provided with an exhaust gas purifying material, i. e. an exhaust gas purifying catalyst.

The fuel injector 11 is actuated and controlled by an air-fuel ratio control unit 15 mainly comprising a microcomputer to deliver fuel according to incoming signals representing engine operating conditions such that an air-fuel ratio of an air-fuel mixture is changed between a lean condition defined by $\lambda > 1$ and a rich conditioned defined as $\lambda \leq 1$. For the air-fuel ratio control, the control unit 15 receives signals from various sensors including an engine speed sensor 16 and an engine throttle position sensor 17.

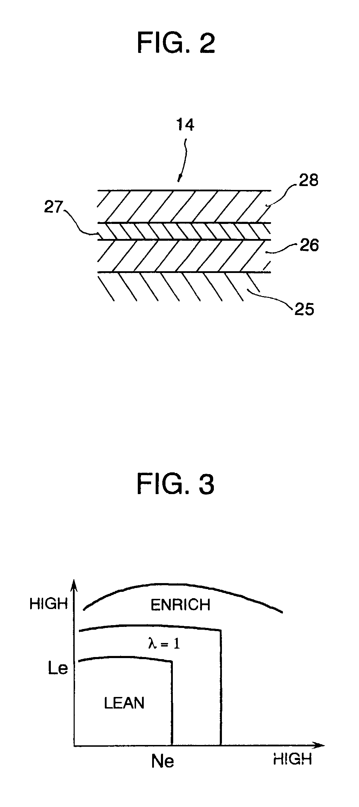

Referring to Figure 2 showing a catalyst 14 which comprises three layers, namely an inner layer 26, an intermediate layer 27 and an outer layer 28, borne on a support bed 25 which is a monolithic honeycomb bed made of cordierite. The monolithic honeycomb bed has 400 cells per square inch and a 6 mil wall between each adjacent cells. The inner layer 26 contains barium (Ba) as a nitrogen oxide (NOx) absorbent, platinum (Pt) as a catalytic metal, and alumina, ceria and alumina hydrate (binder) as carrier materials for carrying Ba and Pt. The intermediate layer 27 contains Pt and rhodium (Rh) as catalytic metals, and zeolite and alumina hydrate (binder) as carrier materials for carrying Pt and Rh. The outer layer 28 contains ceria as a sulphur compound absorbent and alumina hydrate (binder).

The catalyst 14 is prepared in a manner described below.

Alumina, ceria and alumina hydrate are mixed with each other at a weight ratio of 46.5 : 46.5 : 7, then water and nitric acid are added into the mixture to make a mixture slurry. The nitric acid is used to adjust pH of the mixture slurry to about 3.5 to 4. The honeycomb bed is dipped in the mixture slurry and dried at 150°C for two hours after blowing off an excess of the mixture slurry, and then burnt at 500°C for two hours. This process is carried out once to bear 78 g/L of alumina and 78 g/L of ceria on the honeycomb bed. The unit "g/L" refers to unit weight per one litre of honeycomb bed. In this instance, the total weight of the mixture is approximately 37% of the weight of the honeycomb bed.

Separately, a dinitro-diamine platinum solution and a rhodium nitrate solution are mixed to provide a solution mixture so that a weight ratio of Pt to Rh is 75:1. Water and powdered zeolite (MFI type) are added to the solution mixture to provide a mixture slurry so that the total weight of Pt and Rh is 24g per 1 kg of zeolite. The mixture slurry is dried by a spray-dry method and then burnt at 500°C for two hours to form powdered zeolite bearing Pt and Rh (which is hereafter referred to Pt-Rh bearing zeolite).

The powdered Pt-Rh bearing zeolite and alumina hydrate are mixed at a weight ratio of 85 : 15, then water is added to the mixture to provide a mixture slurry. The honeycomb bed with the alumina and ceria borne thereon is dipped in the mixture slurry and dried at 150°C for two hours after blowing off an excess of the mixture slurry. Further it is burnt at 500°C for two hours to let the honeycomb bed bear 20 g/L to 22 g/L of Pt-Rh bearing zeolite which is approximately 5 weight % of the honeycomb bed.

Ceria and alumina hydrate are mixed at a weight ratio of 10 : 1, then water is added to the mixture to make a mixture slurry. The honeycomb bed with Pt-Rh bearing zeolite is dipped in the mixture slurry, and then the honeycomb bed is dried at 150°C for two hours after blowing off an excess of the mixture slurry and further burnt at 500°C for two hours to let the honeycomb bed bear 80 g/L to 860 g/L of ceria, which is approximately 20 to 90% of the honeycomb bed.

The resultant honeycomb bed is impregnated with a mixture of a dinitro-diamine platinum solution and a barium acetate solution so as to bear 2 g/L of Pt and 80 g/L of Ba. After the impregnation, the honeycomb bed is dried at 150°C for two hours and burnt at 500°C for two hours to provide the catalyst 14. In this process the Ba solution and the Pt solution reach the alumina in the inner layer so that Ba and Pt are borne on the alumina without being caught by the ceria and the zeolite because of their small specific surface areas, and because ceria is hard to bear Ba.

The air/fuel ratio control unit 15 varies an air-fuel ratio by controlling a fuel-injection pulse width. The fuel injection pulse width Ta is defined by the following expression:

$$Ta = Tr \times K$$

where Tr is the basic fuel-injection pulse width and K is the correction factor.

The correction factor K takes a value dictated by $\lambda = 1$ for K = 1, a value dictated by $\lambda > 1$ for K < 1, or a value dictated by $\lambda < 1$ for K > 1. Optimum values for the basic fuel injection pulse width Tr are experimentally determined according to changes in engine speed Ne and engine loading Ce which is represented by intake air quantity and are stored in the form of an electronic control data map. Further, the optimum values for the correction factors K are experimentally determined according to changes in engine operating condition and are stored in the form of electronic control data map.

Specifically, as shown in Figure 3, while the engine temperature is high enough for example, the correction factor K is less than 1 in an engine operating zone of low to intermediate engine speeds Ne and low to intermediate engine loading Le (which is a lean zone defined by $\lambda > 1$ and in which an air-fuel ratio is 2 to 200 and an oxygen concentration in the exhaust gas is higher than 5%), equal to 1 in an engine operating zone of high engine speeds Ne and high engine loading Le (which is a rich zone defined by $\lambda = 1$) surrounding the lean zone, and greater than 1 in an engine operating zone of extraordinarily high engine speeds Ne and extraordinarily high engine loading Le (which is an enriched zone defined by $\lambda < 1$). On the other hand, while the engine is cold, the correction factor K is equal to 1 in an engine operating zone of low to intermediate engine speeds Ne and low to intermediate engine loading Le (which is a rich zone defined by $\lambda = 1$), and greater than 1 in an engine operating zone of high engine speeds Ne and high engine loading Le (which is an enriched rich zone defined by $\lambda > 1$) surrounding the rich zone.

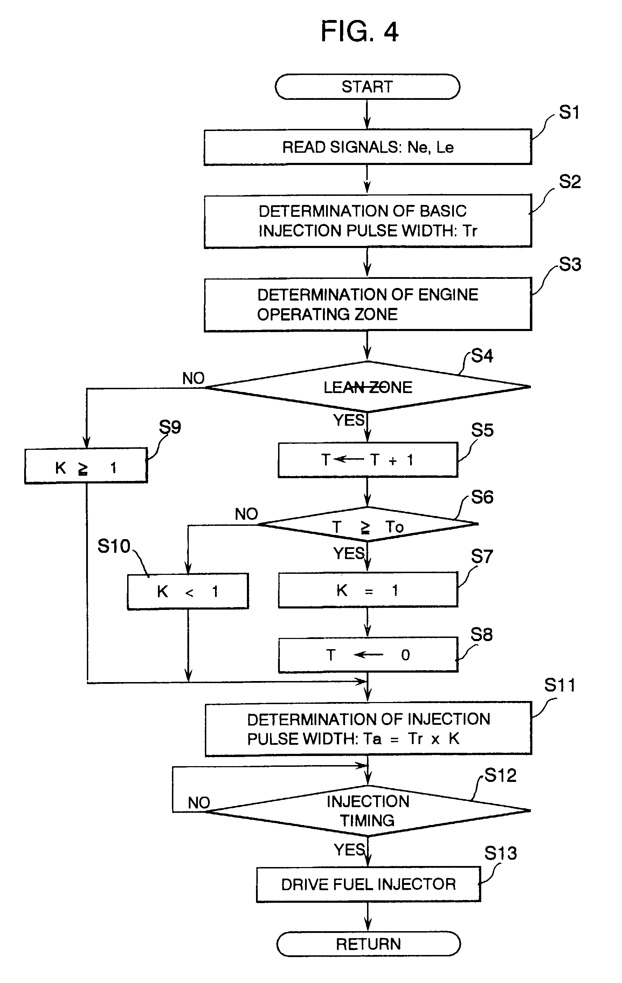

Figure 4 is a flow chart illustrating a sequence routine of air-fuel ratio control for a microcomputer of the control unit 15. When the flow chart logic commences and control proceeds directly to a function block at step S1 where the control unit 15 reads in signals representing an engine speed Ne and an engine loading Le from the speed sensor 16 and the throttle position sensor 17. On the basis of the engine speed Ne and loading Le, a basic injection pulse width Tr and an engine operating zone are determined at steps S2 and S3, respectively. Subsequently, a comparison is made at step S4 to determine whether the current engine operating condition is in the lean zone. When in the lean zone, an internal timer is actuated to count a time T at step S5. The time T is compared with a predetermined critical time To at step S6. When the time T is equal to or greater than the critical time To, the correction factor K is established to be equal to 1 (one) at step S7, and the internal timer is stopped at step S8. On the other hand, the correction factor K is established to be equal to or greater than 1 (one) at step S9 when the engine operating condition is out of the lean zone, or is established to be less than 1 (one) at step S10 when the critical time To has not yet lapsed even while the engine operating condition is in the lean zone.

After establishing the correction factor K, an injection pulse width Ta is determined based on the basic injection pulse width Tr and the correction factor K at step S11. At a fuel injection timing at step S12, the fuel injector 11 is pulsed with the fuel injection pulse width Ta at step S13.

The critical time To is experimentally determined as a time from the beginning of absorption of a sulphur emission in the exhaust gas by the ceria in the outer layer 28 of the catalyst 14, namely a time at which the engine operating condition turns from the rich zone to the lean zone, to an occurrence of a significantly sharp drop in sulphur absorption performance of the ceria, namely a time immediately before saturation of sulphur compounds in the outer layer 28 of the catalyst 14. In this instance, while the engine operating condition is in the lean zone, the air-fuel ratio dictated by $\lambda$ (an air excess factor) becomes high with the result of risen oxygen concentration of the exhaust gas. Consequently, the sulphur compounds in the exhaust gas are absorbed by the ceria in the outer layer 28 of the catalyst 14, so as to prevent Ba in the inner layer 26 from sulphur poisoning and to make Ba absorb nitrogen oxides (NOx) in the exhaust gas with a high efficiency. Because, even while the engine operating condition is in the lean zone, the air-fuel ratio dictated by $\lambda$ intermittently attains 1 (one), it is eliminated that the outer layer 28 of the catalyst 14 is saturated with sulphur compounds or that the inner layer 26 is saturated with NOx. In other words, since the oxygen concentration of the exhaust gas drops when the air-fuel ratio of an air-fuel mixture represented by $\lambda$ reaches 1 (one), Ba in the inner layer 26 of the catalyst releases NOx therefrom and is thereby restored. The released NOx is deoxidised by Pt or the like. On the other hand, the ceria in the inner layer 28 of the catalyst 14 releases sulphur compounds and is thereby restored. At this time, the air-fuel ratio represented by $\lambda$ is 1 (one), which prevents Ba from being poisoned by sulphur released from the ceria.

When restarting the engine after a stop, it may be done to count a time for which the engine operating condition is in the lean zone after a lapse of a time T before the engine stop. Further, in place of operating the engine in the rich zone ($\lambda = 1$) after every specified time period, the engine may be operated in the rich zone ($\lambda = 1$) at a time that ceria is saturated with sulphur compounds. The saturation of ceria with sulphur compounds is presumed to occur at a time, for example, that a specified total quantity of intake air is introduced. Furthermore, the intermittent engine operation in the rich zone ($\lambda = 1$) may be continually repeated. The air-fuel ratio control may be performed by controlling an electrically operated throttle valve to vary the intake air quantity in place of varying the injection pulse width.

In order to evaluate the catalyst of the invention, four sample catalysts and one comparative catalyst were prepared by the process described above. First sample catalyst had the outer layer containing ceria of 80 g/L second one had the outer layer containing ceria of 140 g/L, third one had the outer layer containing ceria of 280 g/L and fourth one had the outer layer containing ceria of 360 g/L. The comparative catalyst had no outer layer. The respective layers of each of the sample catalysts and comparative catalyst had less than 1 % impurities.

NOx absorption rates (NOx purification rates) were measured by flowing a simulated exhaust gas such as shown in TABLE I through a reactor in which each catalyst was fixed. The simulated exhaust gas was flushed at a space velocity (SV) of 55000 h⁻¹ at 350°C. During the measurements the simulated exhaust gas initially having a composition resulting from combustion of a lean air-fuel mixture was changed to have a composition resulting from combustion of a rich air-fuel mixture ($\lambda = 1$) and then, after being kept with the composition for a predetermined time period, was changed back to the initial composition again. The NOx absorption rate was measured for 130 seconds after being changed back to the initial condition.

The composition of the simulated gas is summarised in the following Table 1.

TABLE 1

| Composition | $\lambda = 1$ | Lean-burn Condition |
|---|---|---|
| HC(propylene) | 4000 ppmC | 4000ppmC |
| CO | 0.16% | 0.16% |
| NOx | 260ppm | 260ppm |
| $H_2$ | 650ppm | 650ppm |
| $CO_2$ | 9.75% | 9.75% |
| $O_2$ | 0.5% | 7% |
| $N_2$ | balance | balance |

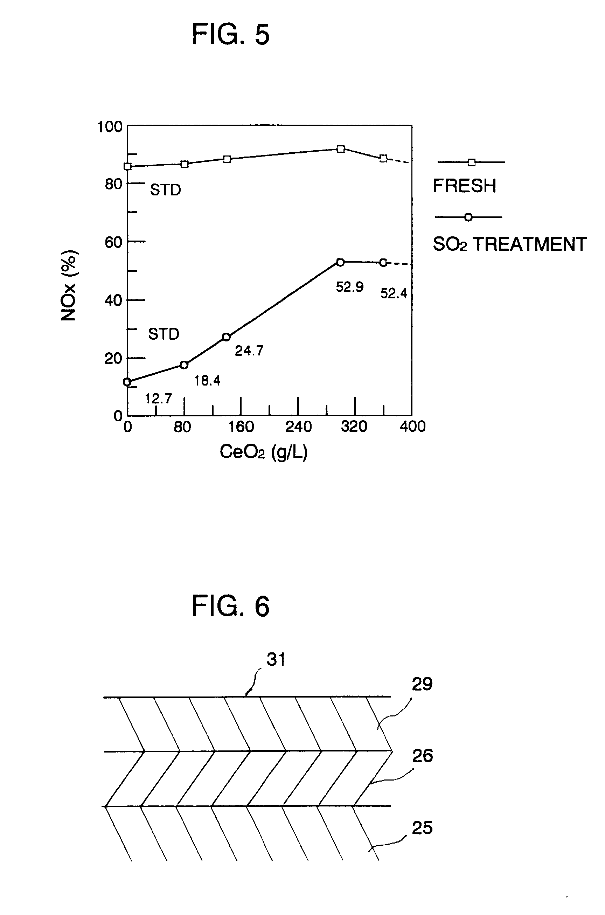

The result of the measurement NOx absorption rate of fresh catalysts is shown in Figure 5 where data indicated by STD is of the comparative catalyst. All of the catalysts show high NOx absorption rates, approximately 90%.

Another result of the measurement of NOx absorption rate of $SO_2$-treated catalysts by use of the same reactor is shown in Figure 5. The $SO_2$-treatment was performed by exposing each catalyst to a treatment gas for 30 minutes before the NOx absorption rate measurement. The treatment gas used in the $SO_2$-treatment process containing 200ppm $SO_2$, 20% $O_2$ and the balance of $N_2$ was flushed at a space velocity of 55000 $h^{-1}$ at a temperature of 350°C for 30 minutes.

Further, as apparent from Figure 5, the NOx absorption rate of the $SO_2$-treated catalyst is lower than that of the fresh catalyst. This result indicates that Ba as NOx absorbent in the inner layer 26 is poisoned with $SO_2$. However, while the comparative catalyst having no outer layer which contains ceria as a sulphur compound absorbent shows a NOx absorbent rate of 12.7%, the sample catalyst having the outer later provides an increase in NOx absorbent rate as a ceria content of the outer layer increases and attains a NOx absorbent rate of approximately 53%. This result indicates that ceria in the outer layer helps to prevent the NOx absorbent ( Ba) in the inner layer from being poisoned by $SO_2$. The intermediate layer 27 activates NOx to cause the NOx absorbent in the inner layer 26 to promote absorption of NOx. It is also proved from the result shown in Figure 5 that the NOx absorbent is effectively prevented from $SO_2$ poisoning when the content ratio of ceria to barium is over 8/3, more preferably over 28/3.

Practically, however, the content ratio of ceria to barium between 5 and 20/3 is recommended in view of preventing the outer layer 28 from separation.

It is summarised from the above evaluation that an outer layer containing a sulphur compound absorbent such as ceria formed as a part of a catalyst having a NOx absorbent effectively prevents the NOx absorbent from sulphur poisoning thereof and can keep its NOx absorbing performance. While NOx absorbed in the NOx absorbent is released when an enriched air-fuel mixture is burnt, according to the catalyst of the invention, the released NOx is reduced and purified by Pt supported on alumina in the inner layer 26, and Pt and Rh supported on zeolite in the intermediate layer 27.

Figure 6 shows a double-layered catalyst 31 comprising an inner layer 26 and an outer layer 29. It has no intermediate layer like the previously discussed three-layered catalyst. The inner layer 26 of the catalyst 81 has the same structure and composition as that of the three-layered catalyst 14 shown in Figure 2. The outer layer 29 contains Pt and Rh as catalytic metals, zeolite as support materials for the catalytic metals, ceria as a sulphur compound absorbent and alumina hydrate (binder). In other words, the outer layer 29 contains both compositions of the intermediate layer and the outer layer of the three-layered catalyst 14 shown in Figure 2. Thus the outer layer 29 of the catalyst 31 has an ability that ceria can avoid the NOx absorbent (Ba) in the inner layer 26 from being poisoned by a sulphur compound by absorbing it in the exhaust gas and also that Pt and Rh supported on zeolite can activate NOx in the exhaust gas so as to promote NOx absorption by the NOx absorbent in the inner layer 26.

Examination was conducted to evaluate oxides of various materials, such as cerium (Ce), titanium (Ti), copper (Cu), tungsten (W), zirconium (Zr), nickel (Ni), iron (Fe) and cobalt (Co), composing the outer layer of the catalyst 14. By means of the process previously described, an oxide of each material and alumina hydrate were mixed at a weight ratio of 10 : 1, and is added to water to provide a slurry. The honeycomb bed bearing 20 g/L to 22 g/L of Pt-Rh bearing zeolite was dipped in the mixture slurry and then dried at 150°C for two hours after blowing off an excess of the mixture slurry. The slurry bed was further burnt at 500°C for two hours. This process was made to bear 100 g/L of each oxide on the honeycomb bed and 6 g/L Pt.

NOx absorption rates of the catalysts provided as above and before $SO_2$-treatment were measured to make comparative evaluation. In the measurements, excepting that the $SO_2$ concentration used in the $SO_2$-treatment was 500 ppm, the same measurement conditions were applied.

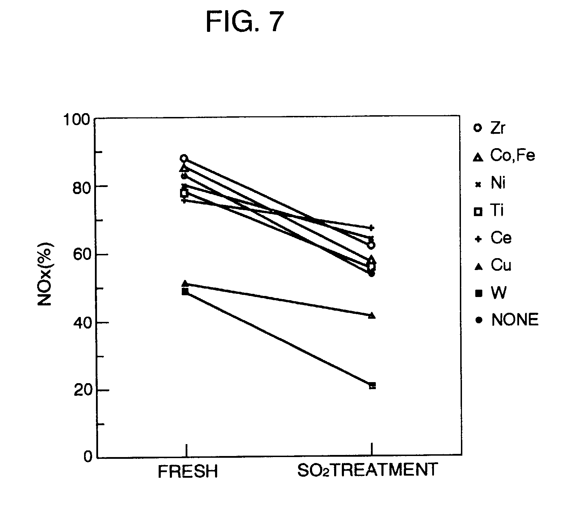

The result of the measurements is shown in Figure 7. In Figure 7, a comparative catalyst is indicated by "none" and has only the inner layer 28 with 6 g/L Pt borne thereon. It is apparent from Figure 7 that the sample catalysts after $SO_2$-treatment in which oxides of Ce, Ti, Cu, W, Zr, Ni, Fe and Co are employed, respectively, have NOx absorption rates higher than that of the comparative catalyst. This means that these oxides are useful for preventing the NOx absorbent from sulphur poisoning and, in particular, that an oxide of Ce, i.e. ceria significantly reduces aggravation of NOx absorption rate.

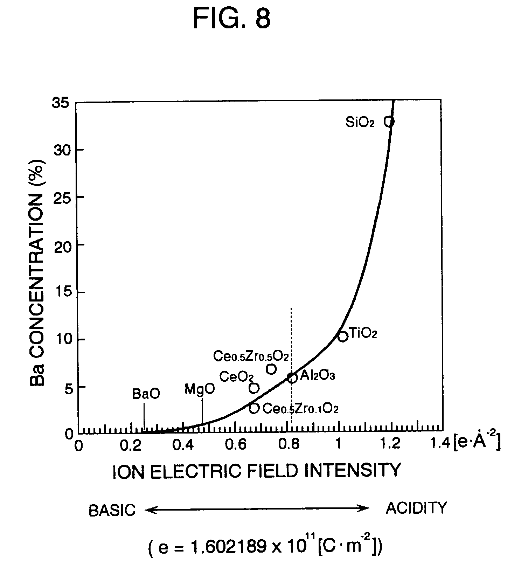

In order to investigate the relationship between the intensity of ionic electric field of an oxide in the layer 29 and the Ba concentration of the outer layer 29, samples of the catalyst 14 were prepared. The sample catalyst had an outer layer 29 containing $CeO_2$, $TiO_2$, $Al_2O_8$, $SiO_2$ and Ce-Zr compound oxide, respectively. Each sample catalyst contained 100 g/L associated oxide, 6 g/L Pt and 80 g/L Ba. Measurements were made to detect the intensity of ionic electric field of the oxide in the outer layer 29 and the Ba concentration of the outer layer 29. The result of the measurements is shown in Figure 8.

As apparent from Figure 8, it is proved that the Ba concentration increases as the intensity of ionic electric field rises. In the case that $Al_2O_3$ is used as a support material in the inner layer 26, when using an oxide which has an intensity of ionic electric field lower than the intensity of ionic electric field (approximately 0.88) of $Al_2O_3$ in the outer layer 29 and which is, for example, any one of $CeO_2$ and Ce-Zr compound oxide, it is possible to avoid unevenly much distribution of Ba in the outer layer and to bear Ba more in the inner layer, MgO, which has a low intensity of ionic electric field, has an effect of preventing unevenly much distribution of Ba in the outer layer.

When a rich air-fuel mixture is burnt, SOx in the exhaust gas passes through the catalyst 14, 31 without being caught, and the sulphur compound absorbent of the catalyst 14, 31 releases sulphur oxides (SOx). This SOx reacts with water in the exhaust gas to yield $H_2S$ which, if discharge into the air, emits a bad smell. To avoid $H_2S$ emission, $H_2S$ absorbent such at NiO and $Fe_2O_3$ may be placed downstream from the catalyst 14, 31 in the exhaust line.

**Claims**

1. An exhaust purifying system for purifying an exhaust gas from an engine (1), which comprises oxygen concentration control means (15) for varying oxygen concentration of the exhaust gas and a catalyst (14, 31) having a NOx absorbing material for absorbing NOx in an exhaust gas from said engine (1) in the presence of oxygen and releasing said NOx when the oxygen concentration in the exhaust gas is reduced, said exhaust gas purifying system, characterised in that said catalyst (14, 31) comprises an inner layer (26) supported on a support member (25) and an outer layer (28,29) supported over said inner layer (26), said inner layer (26) containing said NOx absorbing material and said outer layer (28,29) containing a sulphur compound absorbing material which absorbs sulphur oxides in the exhaust gas in the presence of oxygen and releases said sulphur oxides when the oxygen concentration in the exhaust gas is reduced.

2. An exhaust gas purifying system as claimed in claim 1, wherein said oxygen concentration control means (15) changes an air-fuel ratio between a ratio represented by an air excess factor greater than one ($\lambda > 1$) and a ratio represented by an air excess factor equal to or less than one ($\lambda \leq 1$).

3. An exhaust gas purifying system as claimed in claim 1 or claim 2, wherein said sulphur compound comprises one of oxides of cerium (Ce), zirconium (Zr), nickel (Ni), iron (Fe) and cobalt (Co).

4. An exhaust gas purifying system as claimed in claim 3, wherein said sulphur oxide absorbing material comprises ceria, said catalyst (14,31) having a ceria content of 80 to 360 grams per one litre of said support member (25).

5. An exhaust gas purifying system as claimed in any one of the preceding claims, wherein said catalyst (14) further comprises an intermediate layer (27) disposed between said inner layer (26) and said outer layer (28), which is capable of activating NOx.

6. An exhaust gas purifying system as claimed in any one of the preceding claims, wherein said inner layer (26) contains a noble metal.

7. An exhaust gas purifying system as claimed in any one of said preceding claims, wherein said NOx absorbing material comprises at least one of alkaline metals, alkaline earth metals and rare earth metals.

8. An exhaust gas purifying catalyst comprising a support member, an inner catalytic layer (26) disposed on said support member (25) and containing a NOx absorbing material which absorbs NOx in an exhaust gas from an engine (1) in the presence of oxygen and releases said NOx absorbed thereby when the oxygen concentration in the exhaust gas is reduced, and an outer catalytic layer (28,29) disposed over said inner catalytic layer (26) and containing ceria, said exhaust gas purifying catalyst (14,31) having a content of 80 to 360 grams per one litre of said support member (25).

9. A method of producing an exhaust gas purifying catalyst which comprises a support member (25) and a catalytic material disposed on said support member (25) and containing a NOx absorbing material which absorbs NOx in an exhaust gas from an engine (1) in the presence of oxygen and releases said NOx absorbed thereby when the oxygen concentration in the exhaust gas is reduced, the method comprising the steps of forming an inner layer (26) bearing a NOx absorbing material on said support member (25), forming an outer layer (28,29) over said inner layer (26) containing a basic compound which is harder to bear said NOx absorbing material than said support material, and impregnating said inner layer (26) with a solution of said NOx absorbing material through said outer layer (28,29) so that inner layer (26) then bears said NOx absorbing material.

10. An exhaust gas purifying catalyst produced by the method claimed in claim 9, wherein said NOx absorbing material comprises at least one of alkaline metals, alkaline earth metals and rare earth metals, said support material comprises alumina, and said basic compound comprises an oxide having an intensity of ionic electric field less than 0.8.

11. An exhaust gas purifying catalyst as claimed in claim 10, wherein said basic compound comprises one of ceria and magnesium.

# FIG. 1

SPEED SENSOR 16

AIR-FUEL RATIO CONTROLLER(MC) 15

POSITION SENSOR 17

EXHAUST GAS PURIFYING CATALYST 14

EP 0 905 354 A2

## FIG. 2

## FIG. 3

# FIG. 4

START

**S1**
READ SIGNALS: Ne, Le

**S2**
DETERMINATION OF BASIC
INJECTION PULSE WIDTH: Tr

**S3**
DETERMINATION OF ENGINE
OPERATING ZONE

**S4**
LEAN ZONE

NO ← / YES ↓

**S9**
$K \geq 1$

**S5**
$T \leftarrow T + 1$

**S6**
$T \geq To$

NO / YES

**S10**
$K < 1$

**S7**
$K = 1$

**S8**
$T \leftarrow 0$

**S11**
DETERMINATION OF INJECTION
PULSE WIDTH: $Ta = Tr \times K$

**S12**
INJECTION
TIMING

NO / YES

**S13**
DRIVE FUEL INJECTOR

RETURN

# FIG. 5

# FIG. 6

# FIG. 7

# FIG. 8

( e = 1.602189 x 10$^{11}$[C · m$^{-2}$])